# EUROPEAN PATENT APPLICATION

(11) **EP 4 075 625 A1**
(43) Date of publication of application: **19.10.2022**
(21) Application number: 20900145.2
(22) Date of filing: 13.11.2020
(51) Int. Cl.: H02J 3/02, H02J 3/38

(54) **SEA ISLAND POWER TRANSMISSION SYSTEM AND CONTROL METHOD THEREFOR**

(30) Priority: 10.12.2019 CN 201911259048
(71) Applicant: Global Energy Interconnection Research Institute Co., Ltd, Beijing 102211 (CN); State Grid Corporation of China, Beijing 100031 (CN)
(72) Inventor: DENG, Zhanfeng, Beijing 102211 (CN); ZHAO, Guoliang, Beijing 102211 (CN); YU, Hongyang, Beijing 102211 (CN); GE, Jing, Beijing 102211 (CN); LIU, Yihan, Beijing 102211 (CN)
(74) Representative: Cabinet Beaumont
(86) International application number: PCT/CN2020/128716
(87) International publication number: WO 2021/115019

(57) **Abstract**

Disclosed are a sea island power transmission system and a control method therefor. The sea island power transmission system comprises: a first sea island platform, comprising a new energy source wind farm, a sea island control switch, a low-frequency busbar collection port, and a first alternating current (AC)/AC frequency conversion apparatus; a second sea island platform, connected to the first sea island platform by means of the low-frequency busbar collection port; a third sea island platform, connected to the first sea island platform by means of the low-frequency busbar collection port; a first AC power grid, connected to the first sea island platform by means of a power transmission cable; and a first AC power grid, connected to the first sea island platform by means of a power transmission cable, or connected to the first sea island platform by means of a bypass switch device, the power transmission cable, and the sea island control switch.

## Description

This application claims priority to Chinese Patent Application No. 201911259048.3 filed with the China National Intellectual Property Administration (CNIPA) on Dec. 10, 2019, the disclosure of which is incorporated herein by reference in its entirety.

### TECHNICAL FIELD

The present disclosure relates to the technical field of power transmission, for example, to an island power transmission system and a control method therefor.

### BACKGROUND

With the development of national economy, the demand for electric power is increasing, and the requirement for power transmission capacity of power grid becomes increasingly higher. When more and more island resources have been developed and the tourism industry has developed rapidly, the power load on the islands has been increasing, the demand for island power supply and inter-island networking has also increased, and in this case, submarine cables no longer satisfy the power transmission requirements. Furthermore, it is difficult and expensive to build new submarine cables, and the flexible high-voltage direct current (HVDC) gird interconnection has disadvantages of high cost and poor flexibility. It is urgent to effectively improve the current carrying capacity of submarine cables through low-frequency power transmission technology. To effectively solve the problems of energy depletion and environmental pollution, the development of new energy has become the route one must take to fight off the three major challenges of energy security, environmental pollution, and climate change and achieve the sustainable development of human society. Wind power generation is one of the most mature power generation manners which have largest-scale development potentials among new energy power generation technologies. In some areas, wind power resources are distributed inversely against a load center, and the large-capacity and long-distance power transmission is required to achieve the optimized distribution of resources. Therefore, low frequency alternating current transmission (LFAC) technology may be adopted as the preferred manner for low-frequency power transmission.

The low frequency alternating current transmission (LFAC) technology is a new type of power transmission technology. In such a technology, the working frequency *ƒ* of the system is reduced so that, on one aspect, the inductive reactance *X_{L}* of the power transmission line decreases with the decrease of the frequency, greatly reducing the impedance of the power transmission line and shortening the electrical distance of the power transmission line equivalently and on another aspect, the capacitive reactance *X_{C}* of the power transmission line increases with the decrease of frequency, reducing the charging reactive power of the cable line and greatly improving the transmission capacity of the line. Therefore, the LFAC is one of the promising power transmission technologies for the grid interconnection of islands and the grid connection of offshore wind power in the future.

In the related art, the island power transmission system usually transmits electricity to a power supply device on one island from a single substation or power distribution station on the land through low-frequency transmission cables. Such an island power transmission system establishes the low-frequency power transmission relationship between the island and the substation or power distribution station on the shore. Since the substation or power distribution station on the shore is used as the power transmission end and the island is used as the to-be-powered end, only the single power transmission from the power transmission end to the to-be-powered end is achieved so that the island power transmission has defects of single manner, low reliability and insufficient transmission capacity and cannot satisfy the power supply demand of the grid interconnection of islands.

### SUMMARY

The present disclosure provides an island power transmission system and a control method therefor, so as to solve the problem in the related art that the island power transmission system has defects of single manner, low reliability and insufficient transmission capacity and cannot satisfy the power supply demand of the grid interconnection of islands.

A first island platform is provided. The first island platform includes a new energy source wind farm, an island control switch, a low-frequency busbar collection port and a first alternating current (AC)-to-AC frequency conversion apparatus and is configured to perform one of the following steps.

Electric power is provided for an electric device in an island area by turning off the island control switch and through at least one of the following: an acquired power frequency electric power, an acquired low-frequency electric power or the new energy source wind farm.

A low-frequency electric power is outputted through the low-frequency busbar collection port. A low-frequency electric power is outputted through the new energy source wind farm, the first AC-to-AC frequency conversion apparatus and the low-frequency busbar collection port.

A second island platform is provided. The second island platform is connected with the first island platform through the low-frequency busbar collection port and is configured to acquire the low-frequency electric power outputted from the low-frequency busbar collection port.

A third island platform is provided. The third island platform is connected with the first island platform through the low-frequency busbar collection port and is configured to acquire the low-frequency electric power outputted from the low-frequency busbar collection port.

A first alternating current power grid is provided. The first alternating current power grid is connected with the first island platform through a power transmission cable and is configured to output a power frequency electric power to the first island platform.

A second alternating current power grid is provided. The second alternating current power grid is connected with the first island platform through a second AC-to-AC frequency conversion apparatus and the power transmission cable and is configured to output a low-frequency electric power to the first island platform; or the second alternating current power grid is connected with the first island platform through a bypass switch device, the power transmission cable and the island control switch and is configured to output a power frequency electric power to the first island platform.

A control method for island power transmission is further provided. The control method is applied to the island power transmission system and includes the steps described below.

In a case where the bypass switch device and the island control switch of the island transmission system are turned off and the new energy source wind farm of the island transmission system is disconnected from a power transmission line, the first alternating current power grid and the second alternating current power grid of the island transmission system output a power frequency electric power to the first island platform of the island transmission system.

In a case where the bypass switch device and the island control switch are turned off, the first alternating current power grid outputs the power frequency electric power to the first island platform, and the second alternating current power grid outputs a low-frequency electric power to the first island platform, or a low-frequency electric power is outputted to the second island platform and the third island platform of the island power transmission system respectively through the new energy source wind farm, the first AC-to-AC frequency conversion apparatus of the island power transmission system and the low-frequency busbar collection port.

In a case where the bypass switch device, the island control switch and the new energy source wind farm are disconnected from the power transmission line, the first alternating current power grid outputs a power frequency electric power to the first island platform, and the second alternating current power grid outputs a low-frequency electric power to the second island platform and the third island platform.

### BRIEF DESCRIPTION OF DRAWINGS

FIG. 1 is a structural diagram of an island power transmission system according to an embodiment of the present disclosure;
FIG. 2 is a structural diagram of an island power transmission system connected with a second alternating current power grid according to an embodiment of the present disclosure;
FIG. 3 is a structural diagram of another island power transmission system according to an embodiment of the present disclosure;
FIG. 4 is a circuit schematic diagram of an island power transmission system connected with a second alternating current power grid according to an embodiment of the present disclosure; and
FIG. 5 is a flowchart of a control method for island low-frequency power transmission according to an embodiment of the present disclosure.

### Reference list

- 1: first alternating current power grid;
- 2: second alternating current power grid;
- 3: first AC-to-AC frequency conversion apparatus;
- 4: bypass switch device;
- 5: first island platform;
- 6: second island platform;
- 7: third island platform;
- 8: first transformer;
- 9: second transformer;
- 10: second AC-to-AC frequency conversion apparatus;
- 11: third AC-to-AC frequency conversion apparatus;
- 12: fourth AC-to-AC frequency conversion apparatus;
- 51: new energy source wind farm;
- 52: low-frequency busbar collection port;
- 53: island control switch;
- 101: AC-to-AC frequency converter;
- 102: switch group;
- 1011: frequency conversion unit;
- 10111: inductor;
- 10112: H-bridge.

### DETAILED DESCRIPTION

Technical solutions in embodiments of the present disclosure will be described in conjunction with drawings in the embodiments of the present disclosure.

### Embodiment 1

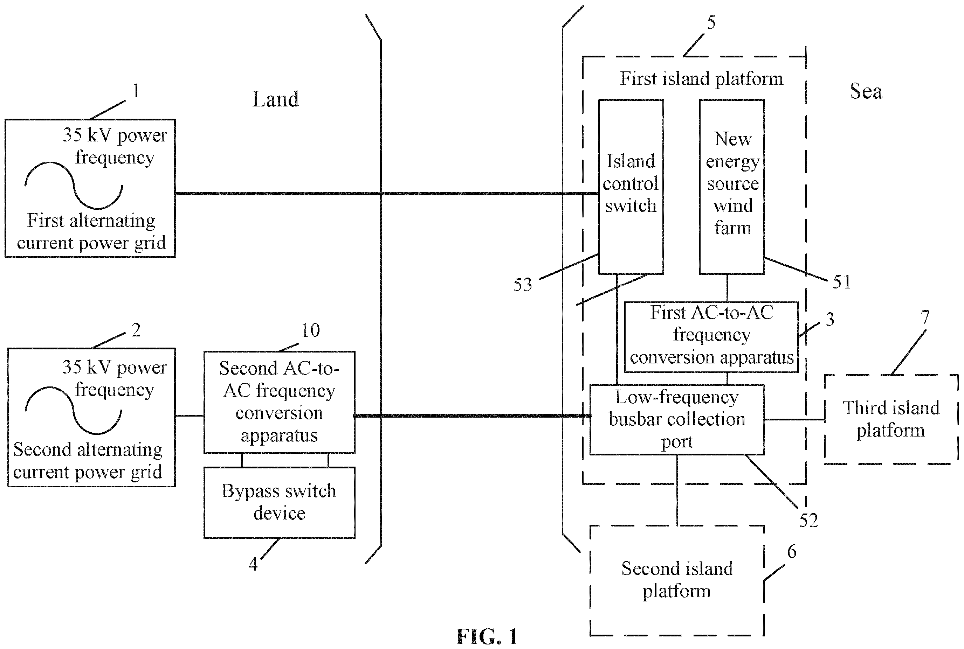

This embodiment of the present disclosure provides an island power transmission system. As shown in FIG. 1, the island power transmission system includes a first island platform 5, a second island platform 6, a third island platform 7, a first alternating power grid 1 and a second alternating current power grid 2.

The first island platform 5 includes a new energy source wind farm 51, an island control switch 53, a low-frequency busbar collection port 52 and a first AC-to-AC frequency conversion apparatus 3. The first island platform 5 may be used as both a power supply platform and a power consumption platform, and the first island platform 5 is arranged on each sea island or island and is used for production operations or other activities. For example, the first island platform 5 may be used for exploiting petroleum on the island by petroleum drilling, and the first island platform 5 may also be used for exploiting coal resources on the island. When the first island platform 5 carries out production operations, an electric device needs to be provided with electric power for production operations. Since multiple islands are usually distributed widely and there is a certain distance between multiple islands, in order to achieve long-distance power transmission between multiple platforms on multiple islands, low-frequency power transmission transformation may be performed on the power supply of the first island platform 5 on the island, thereby increasing the transmission capacity, lengthening the transmission distance, saving the transformation cost and reducing the construction difficulty.

The first island platform 5 may be connected with other platforms on the island to achieve the grid interconnection of islands so that the first island platform 5 may serve as an intermediate hub platform for multiple islands. The first island platform 5 is provided with the new energy source wind farm 51, the island control switch 53, the low-frequency busbar collection port 52 and the first AC-to-AC frequency conversion apparatus 3. The new energy source wind farm 51 may be multiple wind power stations set up offshore. Since the new energy source wind farm 51 belongs to renewable energy and is inexhaustible, in combination with the utilization of wind energy, the consumption of other energy sources can be reduced, and other energy sources can be saved to a great extent. Moreover, wind energy is clean energy and causes less environmental pollution, ensuring the healthy life of residents. Therefore, when the new energy source wind farm 51 is used for collection power generation, energy sources can be saved, and it is beneficial to environmental protection. The island control switch 53 is configured to control the power transmission line of the first island platform 5, and the low-frequency busbar collection port 52 is configured to collect the low-frequency electric power of the power transmission line.

In an embodiment, the first island platform 5 is configured to provide electric power for an electric device in an island area by turning off the island control switch 53 and through an acquired power frequency electric power and/or an acquired low-frequency electric power and/or the new energy source wind farm 51. The first island platform 5 may obtain a power frequency electric power from the alternating current power grid on land, and may also obtain a low-frequency electric power from the alternating current power grid on land. The first island platform 5 may provide electric power for the electric device in the island area through the obtained power frequency electric power and/or low-frequency electric power. When the first island platform 5 provides the electric power for the electric device in the island area through the low-frequency electric power, the low-frequency electric power may be converted into the power frequency electric power through the first AC-to-AC frequency conversion apparatus 3 before the power supply. The first island platform 5 may also generate electric power through the new energy source wind farm 51 to provide electric power for the electrical device in the island area.

In an embodiment, the first island platform 5 may also output a low-frequency electric power through the low-frequency busbar collection port 52, the low-frequency electric power may be obtained from the alternating current power grid on land through the low-frequency power transmission cable and then collected by the low-frequency busbar collection port 52 on the first island platform 5. The first island platform 5 may also output a low-frequency electric power through the new energy source wind farm 51, the first AC-to-AC frequency conversion apparatus 3 and the low-frequency busbar collection port 52. The power frequency electric power generated through the new energy source wind farm 51 is converted into the low-frequency electric power through the first AC-to-AC frequency conversion apparatus 3 and collected by the low-frequency busbar collection port 52.

The second island platform 6 is connected with the first island platform 5 through the low-frequency busbar collection port 52 and is configured to acquire the low-frequency electric power outputted from the low-frequency busbar collection port 52. The second island platform 6 may be an island or another island platform on other islands. The second island platform 6 acquires electric power through the first island platform 5 and conducts low-frequency grid interconnection with the first island platform 5.

The third island platform 7 is connected with the first island platform 5 through the low-frequency busbar collection port 52 and is configured to acquire the low-frequency electric power outputted from the low-frequency busbar collection port 52. The third island platform 7 may be an island or another island platform on other islands. The third island platform 7 also acquires electric power through the first island platform 5 and conducts low-frequency grid interconnection with the first island platform 5.

The first alternating current power grid 1 is connected with the first island platform 5 through a power transmission cable and is configured to output a power frequency electric power to the first island platform 5. The first alternating current power grid 1 may be a substation on land. The first alternating current power grid 1 provides a power frequency electric power for the first island platform 5 on the island. In FIG. 1, the first alternating current power grid 1 is a 35 kV substation which is configured to provide a power frequency electric power to the first island platform 5 through a power transmission cable.

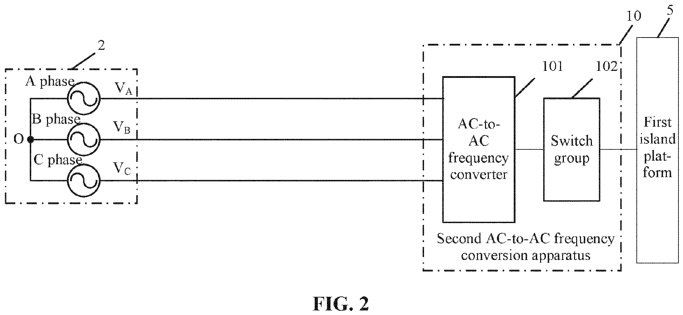

The second alternating current power grid 2 is connected with the first island platform 5 through a second AC-to-AC frequency conversion apparatus 10 and a power transmission cable and is configured to output a low-frequency electric power to the first island platform 5; or the second alternating current power grid 2 is connected with the first island platform 5 through a bypass switch device 4, the power transmission cable and the island control switch 53 and is configured to output a power frequency electric power to the first island platform 5. The second alternating current power grid 2 may be another substation on land, and the second alternating current power grid 2 provides a low-frequency electric power to the first island platform 5 on the island. When the second AC-to-AC frequency conversion apparatus 10 fails or is inconvenient to use, the second alternating current power grid 2 may bypass the second AC-to-AC frequency conversion apparatus 10 through the bypass switch device 4. at this point, the second alternating current power grid 2 may also provide a power frequency electric power to the first island platform 5. As shown in FIG. 2, the three-phase voltage of the second alternating current power grid 2 is represented as an A-phase voltage V_{A}, a B-phase voltage V_{B} and a C-phase voltage Vc, respectively, and the phase difference of the three-phase voltage is 120 degrees. The converted three-phase voltage is represented as a first voltage VM_{A}, a second voltage VM_{B} and a third voltage VMc, respectively, and the phase difference of the converted three-phase voltage is 120 degrees. In this embodiment, the second alternating current power grid 2 is generally built on land, collects electric power generated by substations corresponding to the second alternating current power grid 2 and outputs electric power to the first island platform 5.

The island power transmission system in this embodiment of the present disclosure not only can transmit different types of electric power to the first island platform 5, but also cannot affect the normal power transmission to the first island platform 5 when the second AC-to-AC frequency conversion apparatus 3 fails or when the second AC-to-AC frequency conversion apparatus 3 needs to be overhauled. In addition, the electrical device in the island area is provided with electric power through the new energy source wind farm 51 of the first island platform 5 and the low-frequency electric power and/or power frequency electric power obtained through the first alternating current power grid 1 and the second alternating current power grid 2. Meanwhile, the first island platform 5, the second island platform 6 and the third island platform 7 may also perform low-frequency grid interconnection, thereby achieving large-capacity long-distance transmission efficiency and enriching the diversity of power transmission.

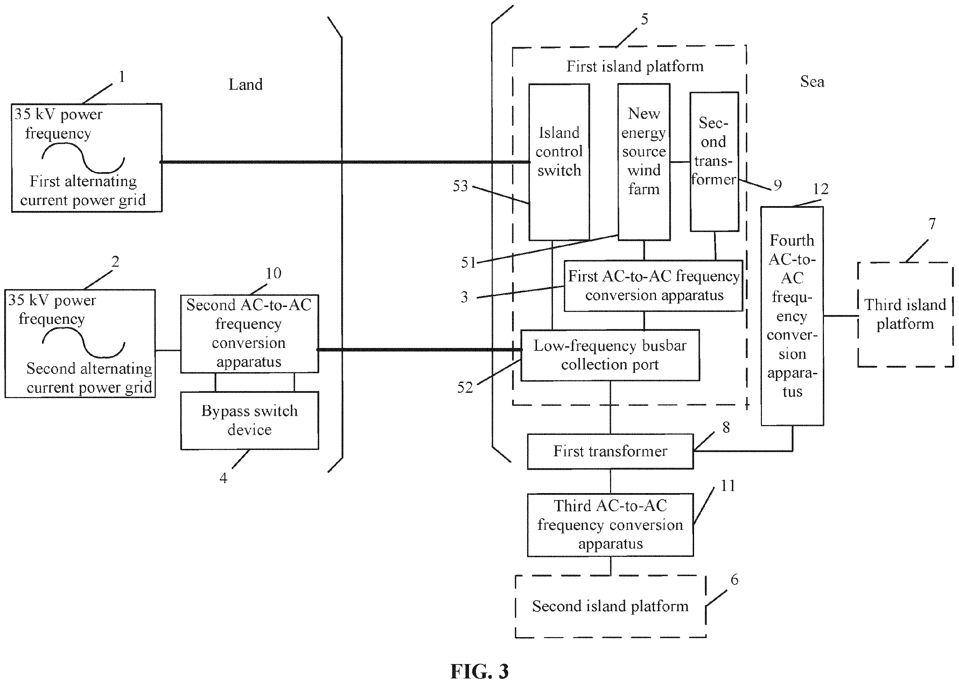

In FIG. 3, the island transmission system in this embodiment of the present disclosure also includes a third AC-to-AC frequency conversion apparatus 11 and a fourth AC-to-AC frequency conversion apparatus 12. The third AC-to-AC frequency conversion apparatus 11 may convert a low frequency corresponding to the low-frequency electric power outputted from the low-frequency busbar collection port 52 into a power frequency corresponding to the power frequency electric power, and finally, electric power is provided for the second island platform 6 through the power frequency, where the power frequency is usually 50 Hz. With the increase of the power transmission frequency, the cable current increases and the insulation performance decreases. Therefore, in comprehensive consideration of the influence of various factors such as insulation and cost, the low frequency after the low frequency transmission may be a low-frequency power transmission frequency of 50/3 Hz, and such a setting can increase the transmission capacity by 3 times, reducing the line impedance and increasing the transmission distance. Similarly, the fourth AC-to-AC frequency conversion apparatus may also convert the low frequency corresponding to the low-frequency electric power outputted from the low-frequency busbar collection port 52 into the power frequency corresponding to the power frequency electric power, and finally, electric power is provided for the third island platform 7 through the power frequency. In FIG. 3, the island transmission system in this embodiment of the present disclosure also includes a first transformer 8 and a second transformer 9.

The primary side of the first transformer 8 is connected with the low-frequency busbar collection port 52, the secondary side of the first transformer 8 is connected with the second island platform 6 through the third AC-to-AC frequency conversion apparatus 11, and the secondary side of the first transformer 8 is also connected with the third island platform 7 through the fourth AC-to-AC frequency conversion apparatus 12. The first transformer 8 may be considered to adjust the output voltage of the low-frequency busbar collection port 52 or may be considered to adjust the input voltage of the second island platform 6 and the third island platform 7.

The primary side of the second transformer 9 is connected with the new energy source wind farm 51, and the secondary side of the second transformer 9 is connected with the first AC-to-AC frequency conversion apparatus 3. The second transformer 9 may adjust the output voltage of the new energy source wind farm 51.

The island power transmission system in this embodiment of the present disclosure, the first AC-to-AC frequency conversion apparatus 3, the second AC-to-AC frequency conversion apparatus 10, the third AC-to-AC frequency conversion apparatus 11 and the fourth AC-to-AC frequency conversion apparatus 12 all include an AC-to-AC frequency converter and a switch group. The AC-to-AC frequency converter includes at least one group of frequency conversion modules, and each group of frequency conversion modules includes three frequency conversion units. The switch group is a circuit breaker and disconnect switches configured at both ends of the circuit breaker.

In this embodiment, in FIG. 2, the second AC-to-AC frequency conversion apparatus 10 includes an AC-to-AC frequency converter 101 and a switch group 102. The input terminal of the AC-to-AC frequency converter 101 is connected with the second alternating current power grid 2. In FIG. 2, the output terminal of the AC-to-AC frequency converter 101 in this embodiment of the present disclosure is connected with the low-frequency busbar collection port 52 arranged on the first island platform 5 through the switch group 102, and the switch group 102 is arranged between the output terminal of the AC-to-AC frequency converter 101 and the first island platform 5 so that the second alternating current power grid 2 and the first island platform 5 may perform the low-frequency power transmission.

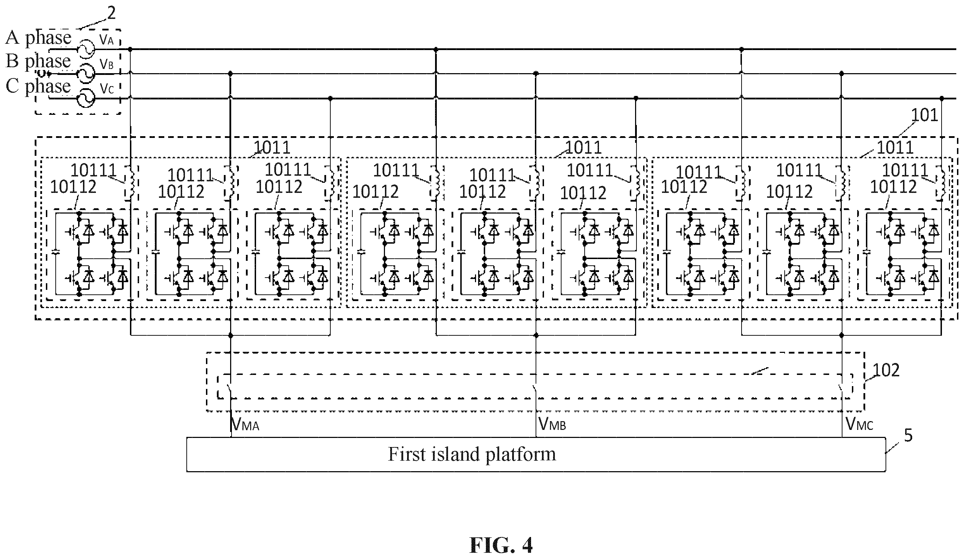

The AC-to-AC frequency converter 101 includes at least one group of frequency conversion modules, each group of frequency conversion modules includes three frequency conversion units. For the first AC-to-AC frequency conversion apparatus 3, the input terminal of each frequency conversion unit is connected with the second alternating current power grid 2 through a power transmission cable, and the output terminal of each frequency conversion unit is connected with the switch group 102 which is connected with the first island platform 5. In this embodiment, as shown in FIG. 4, the AC-to-AC frequency converter 101 includes one group of frequency conversion modules, and the group of frequency conversion modules includes three frequency conversion units 1011. Each frequency conversion unit 1011 includes three frequency conversion bridge legs. Each frequency conversion bridge leg includes an inductor 10111 and an H-bridge 10112. The first terminal of the inductor 1011 is connected with the first terminal of the H-bridge 10112, the second terminal of the inductor 10111 serves as the input terminal of each frequency conversion bridge leg, and the second terminal of the H-bridge 10112 serves as the output terminal of each frequency conversion bridge leg. The input terminals of the three frequency conversion bridge legs are separately connected with an A phase, a B phase and a C phase of the first alternating current power grid 1, and the output terminals of the three frequency conversion bridge legs are connected with the switch group 102. The AC-to-AC frequency converter 101 includes 9 bridge legs composed of cascaded H-bridges 10112, where a three-phase low-frequency alternating current is outputted from neutral points of H-bridges 10112.

The H-bridge 10112 includes at least one fully-controlled H-bridge. In this embodiment, in FIG. 4, each H-bridge 10112 includes one fully-controlled H-bridge. The fully-controlled H-bridge includes two groups of power electronic device bridge legs and a direct current capacitor, the two groups of power electronic device bridge legs are connected in parallel, each group of power electronic device bridge legs includes two power electronic devices that are connected in series, and the direct current capacitor is connected in parallel with the two groups of power electronic device bridge legs. The two power electronic devices include an insulated-gate bipolar transistor (IGBT) and an anti-parallel diode connected in parallel with the IGBT. In other embodiments, the power electronic device may also be a metal-oxide-semiconductor (MOS) field-effect transistor, a bipolar junction transistor (BJT) or the like, and may be set reasonably as needed. Since the fully-controlled H-bridge can withstand a limited voltage level and the voltage of the first island platform 6 is relatively high, multiple fully-controlled H-bridges are required to be connected in parallel. In other embodiments, the number of fully-controlled H-bridges connected in parallel may be set reasonably as needed.

### Embodiment 2

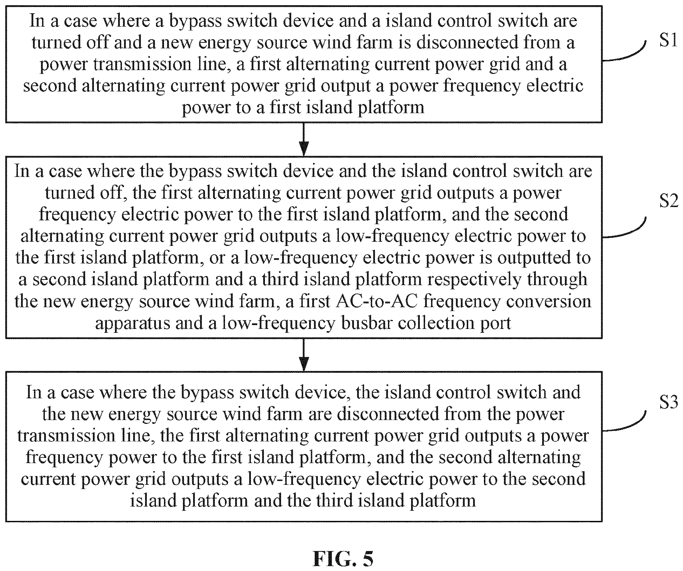

This embodiment of the present disclosure provides a control method for island low-frequency power transmission. As shown in FIG. 5, the control method includes the steps described below. In step S1, in a case where the bypass switch device and the island control switch are turned off and the new energy source wind farm is disconnected from a power transmission line, the first alternating current power grid and the second alternating current power grid output a power frequency electric power to the first island platform. In FIG. 1, when the bypass switch device and the island control switch on the first island platform are turned off and the new energy source wind farm on the first island platform is disconnected from the power transmission line, the power frequency electric power may be simultaneously transmitted through the first alternating current power grid and the second alternating current power grid on land. When the bypass switch device is turned off, the first AC-to-AC frequency conversion apparatus is bypassed so as to facilitate the equipment maintenance of the first AC-to-AC frequency conversion apparatus.

In step S2, in a case where the bypass switch device and the island control switch are turned off, the first alternating current power grid outputs a power frequency electric power to the first island platform, and the second alternating current power grid outputs a low-frequency electric power to the first island platform, or a low-frequency electric power is outputted to the second island platform and the third island platform respectively through the new energy source wind farm, the first AC-to-AC frequency conversion apparatus and the low-frequency busbar collection port. The first alternating current power grid and the second alternating current power grid may simultaneously transmit electric power. The first alternating current power grid may only transmit a power frequency electric power separately, while the second alternating current power grid may transmit both a power frequency electric power and a low-frequency electric power. When the bypass switch device is disconnected, it shows that the first AC-to-AC frequency conversion apparatus is in normal condition, and the second alternating current power grid may output a low-frequency electric power to the first island platform after the first AC-to-AC frequency conversion apparatus performs frequency conversion. Meanwhile, the low-frequency electric power may also be transmitted to the second island platform and the third island platform through the new energy source wind farm, the first AC-to-AC frequency conversion apparatus and the low-frequency busbar collection port, that is, the first island platform, the second island platform and the third island platform perform the low-frequency grid interconnection.

In step S3, in a case where the bypass switch device, the island control switch and the new energy source wind farm are disconnected from the power transmission line, the first alternating current power grid outputs a power frequency power to the first island platform, and the second alternating current power grid outputs a low-frequency electric power to the second island platform and the third island platform.

In the control method for the island low-frequency power transmission in this embodiment of the present disclosure, the bypass switch device and the island control switch are switched so that different types of electric power can be transmitted to the first island platform and the normal power transmission to the first island platform cannot be affected when the second AC-to-AC frequency conversion apparatus fails or when the second AC-to-AC frequency conversion apparatus needs to be overhauled. In addition, the electrical device in the island area is provided with electric power through the new energy source wind farm of the first island platform and the low-frequency electric power and/or power frequency electric power acquired through the first alternating current power grid and the second alternating current power grid. Meanwhile, the first island platform, the second island platform and the third island platform may also perform low-frequency grid interconnection, thereby achieving large-capacity long-distance transmission efficiency and enriching the diversity of power transmission.

## Claims

1. An island power transmission system, comprising:
a first island platform, a second island platform, a third island platform, a first alternating current power grid, and a second alternating current power grid;
wherein the first island platform comprises a new energy source wind farm, an island control switch, a low-frequency busbar collection port and a first alternating current, AC-to-AC frequency conversion apparatus; and
wherein the first island platform is configured to perform at least one of:
providing electric power for an electric device in an island area by turning off the island control switch and through at least one of the following: an acquired power frequency electric power, an acquired low-frequency electric power or the new energy source wind farm;
outputting a low-frequency electric power through the low-frequency busbar collection port; or
outputting a low-frequency electric power through the new energy source wind farm, the first AC-to-AC frequency conversion apparatus and the low-frequency busbar collection port;
wherein the second island platform is connected with the first island platform through the low-frequency busbar collection port and is configured to acquire the low-frequency electric power outputted from the low-frequency busbar collection port;
wherein the third island platform is connected with the first island platform through the low-frequency busbar collection port and is configured to acquire the low-frequency electric power outputted from the low-frequency busbar collection port;
wherein the first alternating current power grid is connected with the first island platform through a power transmission cable and is configured to output a power frequency electric power to the first island platform; and
wherein the second alternating current power grid is connected with the first island platform through a second AC-to-AC frequency conversion apparatus and a power transmission cable and is configured to output a low-frequency electric power to the first island platform; or the second alternating current power grid is connected with the first island platform through a bypass switch device, the power transmission cable and the island control switch and is configured to output a power frequency electric power to the first island platform.

2. The island power transmission system according to claim 1, further comprising: a third AC-to-AC frequency conversion apparatus and a fourth AC-to-AC frequency conversion apparatus;
wherein the second island platform is connected with the low-frequency busbar collection port through the third AC-to-AC frequency conversion apparatus, and the third island platform is connected with the low-frequency busbar collection port through the fourth AC-to-AC frequency conversion apparatus.

3. The island power transmission system according to claim 2, further comprising:
a first transformer, wherein a primary side of the first transformer is connected with the low-frequency busbar collection port, a secondary side of the first transformer is connected with the second island platform through the third AC-to-AC frequency conversion apparatus, and the secondary side of the first transformer is connected with the third island platform through the fourth AC-to-AC frequency conversion apparatus; and
a second transformer, wherein a primary side of the second transformer is connected with the new energy source wind farm, and a secondary side of the second transformer is connected with the first AC-to-AC frequency conversion apparatus.

4. The island power transmission system according to claim 2, wherein the first AC-to-AC frequency conversion apparatus, the second AC-to-AC frequency conversion apparatus, the third AC-to-AC frequency conversion apparatus and the fourth AC-to-AC frequency conversion apparatus all comprise an AC-to-AC frequency converter and a switch group, wherein the AC-to-AC frequency converter comprises at least one group of frequency conversion modules, and each frequency conversion module of the at least one group of frequency conversion modules comprises three frequency conversion units.

5. The island power transmission system according to claim 4, wherein the switch group comprises a circuit breaker and disconnect switches configured at both ends of the circuit breaker.

6. The island power transmission system according to claim 4, wherein each frequency conversion unit of the three frequency conversion units comprises three frequency conversion bridge legs, each frequency conversion bridge leg of the three frequency conversion bridge legs comprises an inductor and an H-bridge, wherein a first terminal of the inductor is connected with a first terminal of the H-bridge, a second terminal of the inductor serves as an input terminal of the each frequency conversion bridge leg, and a second terminal of the H-bridge serves as an output terminal of the each frequency conversion bridge leg.

7. The island power transmission system according to claim 6, wherein the H-bridge comprises at least one fully-controlled H-bridge, each fully-controlled H-bridge of the at least one fully-controlled H-bridge comprises two groups of power electronic device bridge legs and a direct current capacitor, the two groups of power electronic device bridge legs are connected in parallel, each group of power electronic device bridge legs of the two groups of power electronic device bridge legs comprises two power electronic devices that are connected in series, and the direct current capacitor is connected in parallel with the two groups of power electronic device bridge legs.

8. The island power transmission system according to claim 7, wherein each of the two power electronic devices comprise an insulated-gate bipolar transistor and an anti-parallel diode connected in parallel with the insulated-gate bipolar transistor.

9. The island power transmission system according to claims 1 to 8, wherein the first alternating current power grid and the second alternating current power grid both comprise a substation.

10. A control method for island power transmission, applied to the island power transmission system according to any one of claims 1 to 9 and comprising:
in a case where the bypass switch device and the island control switch of the island transmission system are turned off and the new energy source wind farm of the island transmission system is disconnected from a power transmission line, outputting, by the first alternating current power grid and the second alternating current power grid of the island transmission system, a power frequency electric power to the first island platform of the island transmission system;
in a case where the bypass switch device and the island control switch are turned off, outputting, by the first alternating current power grid, a power frequency electric power to the first island platform, and outputting, by the second alternating current power grid, a low-frequency electric power to the first island platform, or outputting a low-frequency electric power to the second island platform and the third island platform of the island power transmission system respectively through the new energy source wind farm, the first AC-to-AC frequency conversion apparatus of the island power transmission system and the low-frequency busbar collection port; and
in a case where the bypass switch device, the island control switch and the new energy source wind farm are disconnected from the power transmission line, outputting, by the first alternating current power grid, a power frequency electric power to the first island platform, and outputting, by the second alternating current power grid, a low-frequency electric power to the second island platform and the third island platform.
